(19) Europäisches Patentamt
European Patent Office
Office européen des brevets

(11) EP 4 733 080 A1

(12) EUROPEAN PATENT APPLICATION
published in accordance with Art. 153(4) EPC

(43) Date of publication:
**29.04.2026 Bulletin 2026/18**

(21) Application number: **24854090.8**

(22) Date of filing: **10.07.2024**

(51) International Patent Classification (IPC):
***B41M 5/40*** *(2006.01)* ***B05D 1/30*** *(2006.01)*
***B05D 1/34*** *(2006.01)* ***B05D 5/00*** *(2006.01)*
***B05D 7/24*** *(2006.01)* ***B41M 5/42*** *(2006.01)*
***B41M 5/323*** *(2006.01)* ***B41M 5/327*** *(2006.01)*
***B41M 5/333*** *(2006.01)* ***B41M 5/337*** *(2006.01)*

(52) Cooperative Patent Classification (CPC):
**B05D 1/30; B05D 1/34; B05D 5/00; B05D 7/24; B41M 5/323; B41M 5/327; B41M 5/333; B41M 5/337; B41M 5/40; B41M 5/42**

(86) International application number:
**PCT/JP2024/024945**

(87) International publication number:
**WO 2025/037499 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 JP 2023131782**
**14.08.2023 JP 2023131783**

(71) Applicant: **Nippon Paper Industries Co., Ltd.**
**Tokyo 114-0002 (JP)**

(72) Inventors:
- **HONDA, Hayato**
  **Tokyo 114-0002 (JP)**
- **HIRAI, Kenji**
  **Tokyo 114-0002 (JP)**

(74) Representative: **Wilson Gunn**
**Centurion House**
**129 Deansgate**
**Manchester M3 3WR (GB)**

# (54) HEAT-SENSITIVE RECORDING BODY AND METHOD FOR PRODUCING SAME

(57) [Problem] To provide a thermosensitive recording medium that has good color developing sensitivity, thermal printing runnability (particularly prevention of head debris adhesion), and rubfastness, as well as good printing preciseness during high-speed thermal printing, and a method for manufacturing the same.

[Means to solve the Problem]

A thermosensitive recording medium having an undercoat layer, a thermosensitive recording layer comprising a colorless or pale colored electron donating leuco dye, an electron accepting color developing agent and a sensitizer, and a protective layer on a substrate in this order, wherein a combined amount(in solid) of the leuco dye, the color developing agent and the sensitizer in the thermosensitive recording layer is 70 weight % or more, and a coating amount of the thermosensitive recording layer is 2.5 g/m$^2$ or less.



Processed by Luminess, 75001 PARIS (FR)

## Description

[Field of the Invention]

The present invention relates to a thermosensitive recording medium and a method for manufacturing a thermosensitive recording medium by utilizing a coloring reaction between a colorless or pale colored electron donating leuco dye (referred to as "leuco dye") and an electron accepting color developing agent (referred to as "color developing agent").

[Background of the Invention]

Thermosensitive recording media are ordinarily prepared by applying a coating solution containing a colorless or pale colored leuco dye and a color developing agent onto a substrate such as paper, synthetic paper, film, plastic and the like. Thermosensitive recording medium develops color through an instantaneous chemical reaction when heated by a thermal head, hot stamp, hot pen, laser light or the like to yield a recorded image. Such thermosensitive recording media are used extensively in recording media such as facsimile devices, computer terminal printers, automatic ticket dispensers, recorders for meters, receipts at super markets and convenience stores and the like.

In recent years, the use of the thermosensitive recording medium is expanding, such as various ticket, receipts, labels, ATM of Bank, meter reading of gas and electricity, cash vouchers, such as car racing or horseracing betting. Therefore, the thermal recording medium is required to have various performances such as water resistance, plasticizer resistance in the image part, heat resistance of blank part, oil resistance, preservation of image and blank parts under harsh conditions, and the like.

In such applications, it is required to be able to print stably on the thermosensitive recording medium. However, frequent printing can cause the recording paper to stick to the print head or head debris to accumulate on the print head, preventing proper printing. In order to solve such problems, a technique is known in which a phosphate ester compound is added to the outermost layer, such as a protective layer (Patent Document 1, etc.).

Further, a thermosensitive recording medium is known in which a color developing sensitivity is improved by coating and drying a thermal recording layer and a protective layer by a simultaneous multilayer curtain coating method. (Patent Document 2, etc.).

[Prior Art Document]

[Patent Document]

Patent Document 1: Japanese Patent Application Laid-Open (kokai) 2012-56184
Patent Document 2: Japanese Patent 5626218

[Summary of the Invention]

[Problems to be solved by the Invention]

However, even when using such conventional technologies, it has been difficult to achieve both color developing sensitivity and thermal printing run-ability (prevention of head debris adhesion and stick resistance).

Therefore, an object of the present invention is to provide a thermosensitive recording medium that has good color developing sensitivity, thermal printing runnability (particularly prevention of head debris adhesion and stick resistance), and rubfastness, as well as good printing preciseness during high-speed thermal printing, and a method for manufacturing the same.

[Means For Solving the Problem]

As a result of intensive studies, the present inventors have found that the color developing sensitivity improves when a combined amount(in solid) of a leuco dye, a color developing agent, and a sensitizer in the thermosensitive recording layer is 70.0% by weight or more. However, if the content of the leuco dyes, etc. in the thermosensitive recording layer is high, head debris adhesion and stick become an issue, so a protective layer was provided. Furthermore, by providing a protective layer, the rubfastness was improved. In addition, the inventors have found that by reducing the amount of the thermosensitive recording layer to 2.5 $g/m^2$ or less, the printing preciseness during high-speed thermal

printing is improved.

The present invention provides a thermosensitive recording medium having an undercoat layer, a thermosensitive recording layer comprising a colorless or pale colored electron donating leuco dye, an electron accepting color developing agent and a sensitizer, and a protective layer on a substrate in this order, wherein a combined amount(in solid) of the leuco dye, the color developing agent and the sensitizer in the thermosensitive recording layer is 70 weight % or more,and a coating amount of the thermosensitive recording layer is 2.5 g/m$^2$ or less.

[Effect of the Invention]

According to the present invention, a thermosensitive recording medium having good color developing sensitivity, thermal printing runnability (particularly prevention of head debris adhesion) and rubfastness, as well as good printing preciseness during high-speed thermal printing can be obtained.

[Modes For Carrying out the Invention]

A thermosensitive recording medium of the present invention has a thermosensitive recording medium having an undercoat layer, a thermosensitive recording layer comprising a colorless or pale colored electron donating leuco dye, an electron accepting color developing agent and a sensitizer, and a protective layer on a substrate in this order, wherein a combined amount(in solid) of the leuco dye, the color developing agent and the sensitizer in the thermosensitive recording layer is 70 weight % or more, and a coating amount of the thermosensitive recording layer is 2.5 g/m$^2$ or less.

Hereinafter, various materials used in the thermosensitive recording layer of the thermosensitive recording medium of the present invention will be illustrated, however, binders, cross-linking agents, pigments and the like can also be used for other coating layers within the range that does not impair the desired advantages on the above-mentioned problems.

< Undercoat layer>

The thermosensitive recording medium of the present invention has an undercoat layer on the substrate.

The undercoat layer comprises mainly a binder and a pigment.

As the binder used for the undercoat layer, commonly used water-soluble polymer or emulsion of hydrophobic polymer may be appropriately used. Specific examples include cellulose derivatives such as polyvinyl alcohol, polyvinyl acetal, hydroxyethyl cellulose, methyl cellulose, carboxymethyl cellulose, etc.; water-soluble polymers such as starch and its derivatives, sodium polyacrylic acid, polyvinylpyrrolidone, acrylic acid amide/acrylic acid ester copolymer, acrylic acid amide/acrylic acid ester/methacrylate copolymer, alkali salt of styrene/maleic anhydride copolymer, alkaliate of isobutylene/maleic anhydride copolymer, polyacrylamide, sodium alginate, gelatin, casein, etc.; emulsion of hydrophobic polymer such as polyvinyl acetate, polyurethane, styrene/butadiene copolymer, polyacrylic acid, polyacrylic acid ester, vinyl chloride/vinyl acetate copolymer, polybutyl methacrylate, ethylene/vinyl acetate copolymer, styrene/butadiene/acrylic copolymer, and the like. These may be used individually and as mixtures of at least two of them.

Any generally used pigment may be used as the pigment in the undercoat layer. As the pigment, for example, inorganic pigment, such as calcium carbonate, silica, zinc oxide, titanium oxide, aluminum hydroxide, magnesium hydroxide, calcined kaolin, clay, talc and the like may be used. These pigments may be used alone or in combination of two or more.

The amount of the pigments in the undercoat layer is ordinarily from 50 to 95 weight parts, preferably from 70 to 90 weight parts per 100 parts by weight of the total solid of the undercoat layer.

Various aids such as a dispersion agent, plasticizer, pH controlling agent, de-foaming agent, water retention agent, preservative, coloring dye, UV absorber and the like may be added to the cating solution for the undercoat layer, as required.

<Thermosensitive recording layer>

The thermosensitive recording layer contains a colorless or pale colored electron donating leuco dye, an electron accepting color developing agent and a sensitizer.

All of the leuco dyes well known in the conventional field of pressure sensitive and thermosensitive recording media may be used as the electron donating leuco dye in the present invention. Although the leuco dye is not particularly restricted, triphenylmethane type compounds, fluorane type compounds, fluorene type compounds, divinyl type compounds and the like are preferred as the leuco dye. Specific examples of the typical colorless to pale colored basic colorless leuco dye (leuco dye precursors) are shown below. In addition, these leuco dye precursors may be used individually and also in mixtures of at least two of them.

<Triphenylmethane type leuco dyes>

3,3-bis(p-Dimethyl aminophenyl)-6-dimethylaminophthalide [alternate name: crystal violet lactone] and 3,3-bis(p-Dimethyl aminophenyl) phthalide [alternate name: malachite green lactone]

<Fluorane type leuco dyes>

3-Diethylamino-6-methylfluorane, 3-diethylamino-6-methyl-7-anilinofluorane, 3-diethylamino-6-methyl-7-(o,p-dimethylanilino)fluorane, 3-diethylamino-6-methyl- 7-chlorofluoran, 3-diethylamino-6-methyl-7-(m-trifluoromethylanilino) fluorane, 3- diethylamino-6-methyl-7-(o-chloroanilino) fluorane, 3-diethylamino-6-methyl-7-(p- chloroanilino) fluorane, 3-diethylamino-6-methyl-7-(o-fluoroanilino) fluorane, 3- diethylamino-6-methyl-7-(m-methylanilino) fluorane, 3-diethylamino-6-methyl-7-n- octylanilino fluorane, 3-diethylamino-6-methyl-7-n-octylamino fluorane, 3-diethylamino-6-methyl-7-benzylamino fluorane, 3-diethylamino-6-methyl-7-dibenzylamino fluorane, 3-diethylamino-6-chloro-7-methyl fluorane, 3-diethylamino-6-chloro-7-anilino fluorane, 3-diethylamino-6-chloro-7-p-methylanilino fluorane, 3-diethylamino-6-ethoxyethyl-7- anilino fluorane, 3-diethylamino-7-methyl fluorane, 3-diethylamino-7-chloro fluorane, 3-diethylamino-7-(m-trifluoromethylanilino) fluorane, 3-diethylamino-7-(o-chloroanilino) fluorane, 3-diethylamino-7-(p-chloroanilino) fluorane, 3-diethylamino-7-(o-fluoroanilino) fluorane, 3-diethylamino-benz[a] fluorane, 3-diethylamino-benz[c] fluorane, 3-dibutylamino-6-methyl-fluorane, 3-dibutylamino-6-methyl-7-anilino fluorane, 3-dibutylamino-6-methyl-7-(o,p-dimethylanilino) fluorane, 3-dibutylamino-7- (o-chloroanilino) fluorane, 3-butylamino-6-methyl-7-(p-chloroanilino) fluorane, 3-dibutylamino-6-methyl-7-(o-fluoroanilino) fluorane, 3-dibutylamino-6-methyl-7-(m- fluoroanilino) fluorane, 3-dibutylamino-6-methyl-chloro fluorane, 3-dibutylamino- 6-ethoxyethyl-7-anilino fluorane, 3-dibutylamino-6-chloro-7-anilino fluorane, 3-dibutylamino-6-methyl-7-p-methylanilino fluorane, 3-dibutylamino-7-(o-chloroanilino) fluorane, 3-dibutylamino-7-(o-fluoroanilino) fluorane, 3-di-n-pentylamino-6-methyl-7- anilino fluorane, 3-di-n-pentylamino-6-methyl-7-(p-chloroanilino) fluorane, 3-di-n- pentylamino-7-(m-trifluoromethylanilino) fluorane, 3-di-n-pentylamino-6-chloro-7-anilino fluorane, 3-di-n-pentylamino-7-(p-chloroanilino) fluorane, 3-pyrolidino-6-methyl-7-anilino fluorane, 3-piperidino-6-methyl-7-anilino fluorane, 3-(N-methyl-N-propylamino)-6-methyl-7-anilino fluorane, 3-(N-methyl-N-cyclohexylamino)-6-methyl-7-anilino fluorane, 3-(N-ethyl-N-cyclohexylamino)-6-methyl-7-anilino fluorane, 3-(N-ethyl-N-xylylamino)-6- methyl-7-(p-chloroanilino) fluorane, 3-(N-ethyl-p-toluidino)-6-methyl-7-anilino fluorane, 3-(N-ethyl-N-isoamylamino)-6-methyl-7-anilino fluorane, 3-(N-ethyl-N-isoamylamino)-6- chloro-7-anilino fluorane, 3-(N-ethyl-N-tetrahydrofurfurylamino)-6-methyl-7-anilino fluorane, 3-(N-ethyl-N-isobutylamino)-6-methyl-7-anilino fluorane, 3-(N-ethyl-N- ethoxypropylamino)-6-methyl-7-anilino fluorane, 3-cyclohexylamino-6-chloro fluorane, 2-(4-oxahexyl)-3-dimethylamino-6-methyl-7-anilino fluorane, 2-(4-oxahexyl)-3- diethylamino-6-methyl-7-anilino fluorane, 2-(4-oxahexyl)-3-dipropylamino-6- methyl-7-anilino fluorane, 2-methyl-6-o-(p-dimethylaminophenyl) aminoanilino fluorane, 2-methoxy-6-p-(p-dimethylaminophenyl) aminoanilino fluorane, 2-chloro-3-methyl-6-p-(p-phenylaminophenyl) aminoanilino fluorane, 2-chloro-6-p-(p-dimethylaminophenyl) aminoanilino fluorane, 2-nitro-6-p-(p-diethylaminophenyl) aminoanilino fluorane, 2-amino-6-p-(p-diethylaminophenyl) aminoanilino fluorane, 2-diethylamino-6-p-(p- diethylaminophenyl) aminoanilino fluorane, 2-phenyl-6-methyl-6-p-(p- phenylaminophenyl) aminoanilino fluorane, 2-benzyl-6-p-(p-phenylaminophenyl) aminoanilino fluorane, 2-hydroxy-6-p-(p-phenylaminophenyl)aminoanilino fluorane, 3-methyl-6-p-(p-dimethylaminophenyl) aminoanilino fluorane, 3-diethylamino-6- p-(p-diethylaminophenyl) aminoanilino fluorane, 3-diethylamino-6-p-(p- dibutylaminophenyl) aminoanilino fluorane and 2,4-dimethyl-6-[(4-dimethylamino) anilino] fluorane.

<Fluorene type leuco dye>

3,6,6-Tris(dimethylamino) spiro[fluorane-9,3'-phthalide] and 3,6,6'-tris (diethylamino) spiro[fluorane-9,3'-phthalide].

<Divinyl type leuco dyes>

3,3-bis-[2-(p-dimethylaminophenyl)-2-(p-methoxyphenyl) ethenyl] -4,5,6,7-tetrabromophthalide, 3,3-bis-[2-(p-dimethylaminophenyl)-2-(p-methoxyphenyl) ethenyl] -4,5,6,7-tetrachlorophthalide, 3,3-bis-[1,1-bis (4-pyrrolidinophenyl) ethylene-2-yl] 4,5,6,7-tetra-bromophthalide, 3,3-bis-[1- (4-methoxyphenyl)-1-(4-pyrrolidinophenyl) ethylene-2-yl] -4,5,6,7-tetrachlorophthalide

<Others>

3-(4-Diethylamino-2-ethoxyphenyl)-3-(1-ethyl-2-methylindol-3-yl)-4-azaphthalide, 3-(4-diethylamino-2-ethoxyphenyl)-3-(1-octyl-2-methylindol-3-yl)-4-azaphthalide, 3-(4-cyclohexyl ethylamino-2-methoxyphenyl)-3-(1-ethyl-2-methylindol-3-yl)-4- azaphthalide, 3,3-bis(1-ethyl-2-methylindol-3-yl)phthalide, 3,6-bis(diethylamino)fluorane- γ-(3'-nitroanilinolactam, 3,6-bis(diethylamino)fluorane-γ-(4'-nitro) anilinolactam, 1,1-bis-[2',2',2",2"-tetrakis-(p-dimethylaminophenyl)-ethenyl]-2,2-dinitrilethane, 1,1-bis-[2',2',2",2"-tetrakis-(p-dimethylaminophenyl)-ethenyl]-2-β-naphthoylethane, 1,1-bis-[2',2',2",2"-tetrakis-(p-dimethylaminophenyl)-ethenyl]-2,2-diacetylethane and bis-[2,2,2',2'-tetrakis-(p-dimethylaminophenyl)-ethenyl]-methylmalonic acid dimethyl ester.

The color developing agent(s) that can be used in the present invention is as follows. As such color developing agents, for example, activated clay, attapulgite, colloidal silica, inorganic acidic substances such as aluminum silicate and the like, 4,4'-isopropylidene diphenol, 1,1-bis(4-hydroxyphenyl) cyclohexane, 2,2-bis(4-hydroxyphenyl)-4-methylpentane, 4,4'-dihydroxydiphenyl sulfide, hydroquinone monobenzyl ether, benzyl 4-hydroxybenzoate, 4,4'-dihydroxy diphenyl sulfone, 2,4'-dihydroxy diphenyl sulfone, 4-hydroxy-4'-isopropoxy diphenyl sulfone, 4-hydroxy-4'-n-propoxy diphenyl sulfone, bis(3-allyl-4-hydroxyphenyl) sulfone, 4-hydroxy-4'-methyldiphenyl sulfone, 4-hydroxyphenyl-4'-benzyloxy phenyl sulfone, 3,4-dihydroxyphenyl-4'-methyl phenyl sulfone, 1-[4-(4-hydroxyphenyl-sulfonyl) phenoxy]-4-[4-(4-isopropoxyphenyl sulfonyl) phenoxy] butane, phenol condensate composition described in Japanese Patent Application Public Disclosure No. 2003-154760, aminobenzene sulfonamide derivatives described in Japanese Patent Application Public Disclosure No. H08-59603, bis(4-hydroxyphenyl thioethoxy) methane, 1,5-di(4-hydroxyphenyl thio)-3-oxapentane, butyl bis(p-hydroxyphenyl) acetate, methyl bis(p-hydroxyphenyl) acetate, 1,1-bis(4-hydroxyphenyl)-1-phenyl ethane, 1,4-bis [α-methyl-α-(4'-hydroxyphenyl)ethyl] benzene, 1,3-bis[α-methyl-α-(4'-hydroxyphenyl)ethyl] benzene, di(4-hydroxy-3-methylphenyl) sulfide, 2,2'-thiobis(3-tert-octylphenol), 2,2'-thiobis(4-tert-octylphenol), 4,4'-bis[3-(phenoxycarbonylamino) methylphenylureidol diphenylsulfone, compounds described in International Publication WO02/081229 or Japanese Patent Application Public Disclosure No. 2002-301873, thiourea compounds such as N,N'-di-m-chlorophenyl thiourea and the like, p-chlorobenzoic acid, stearyl gallate, bis[zinc 4-octyloxy carbonylamino salicylate] dihydrate, 4-[2-(p-methoxyphenoxy) ethyloxyl salicylic acid, 4-[3-(p-tolylsulfonyl) propyloxyl salicylic acid, aromatic carboxylic acids such as 5-[p-(2-p-methoxyphenoxyethoxy) cumyl] salicylic acid, and salts of these aromatic carboxylic acids and polyvalent metals such as zinc, magnesium, aluminum, calcium, titanium, manganese, tin, nickel and the like, and, furthermore, antipirin complexes of zinc thiocyanate and complex zinc salts of terephthal aldehyde acid with other aromatic carboxylic acids and the like may be cited.

These color developing agents may be used individually or as a mixture of at least two of them. 1-[4-(4-hydroxyphenyl-sulfonyl) phenoxy]-4- [4- (4-isopropoxyphenyl sulfonyl) phenoxy] butane is available, for example, under the trade name of JKY-214 produced by API Corporation. The phenol condensate composition described in Japanese Patent Application Public Disclosure No. 2003-154760 is available, for example, under the trade name of JKY-224 produced by API Corporation.

The compound described in International Publication WO02/081229 is available, for example, under the trade names of NKK-395 and D-100 produced by Nippon Soda Co., Ltd. In addition, high molecular weight aliphatic acid metal complex salts described in Japanese Patent Application Public Disclosure No. H10-258577 and metal chelate type color developing components such as polyvalent hydroxy aromatic compounds and the like may also be present.

The color developing agent may contain a urea compound represented by the following general formula (Formula 1). This urea compound does not contain bisphenol A or bisphenol S.

[Formula 1]

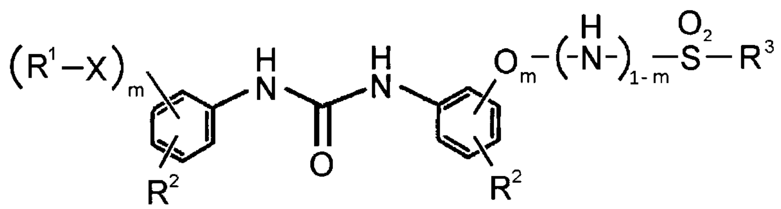

(wherein X represents -O- or -NH-, $R^1$ represents a hydrogen atom or $-SO_2-R^3$, $R^3$ represents a substituted or unsubstituted alkyl group, an aralkyl group or an aryl group, $R^2$ represents a hydrogen atom or an alkyl group, m represents 0 or 1).

As a color developing agent, the above-mentioned color developing agent(s) and this urea compound may be used in combination, or the urea compound may be used alone as a color developing agent.

The urea compound is preferably the following (1) or (2),

(1) a first urea compound represented by the following general formula (Formula 2)

[Formula 2]

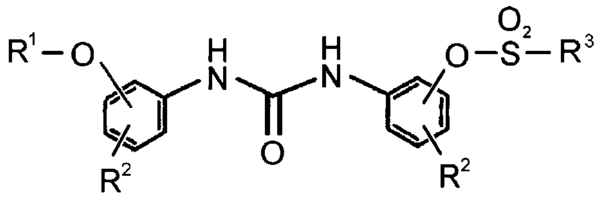

(wherein $R^1$, $R^2$, $R^3$, and n are defined as described above),
(2) a second urea compound represented by the following general formula (Formula 3)

[Formula 3]

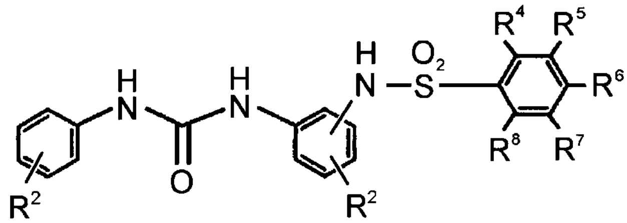

(where, $R^2$ is defined as described above, the definition of $R^4$ to $R^8$ are described later).

The first urea compound used in the present invention is preferably represented by the following formula (Formula 4).

[Formula 4]

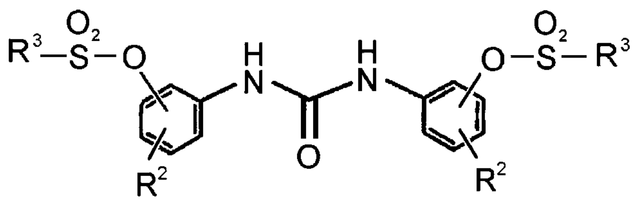

In the above general formula (Formula 2) and general formula (Formula 4), $R^3$ represents an alkyl group, an aralkyl group or an aryl group, all of which may be substituted or unsubstituted, and preferably a substituted or unsubstituted aryl group.

When these are substituted, the substituent is preferably an alkyl group having 1 to 12 carbon atoms, an alkoxy group having 1 to 12 carbon atoms, an aryl group having 6 to 12 carbon atoms or a halogen atom. Further, the plurality of $R^3$ may be the same or different.

The position of $R^1$- O- in the benzene ring in the general formula (Formula 2) may be the same or different, and is preferably the 3-position, 4-position or 5-position.

The position of $R^3$-$SO_2$-O- in the benzene ring in the general formula (Formula 2) and general formula (Formula 4) may be the same or different, and is preferably the 3-position, 4-position or 5-position.

The alkyl group is, for example, a linear, branched or alicyclic alkyl group, preferably having 1 to 12 carbon atoms. The alkyl group includes methyl group, ethyl group, n-propyl group, iso-propyl group, n-butyl group, iso-butyl group, t-butyl group, cyclopentyl group, hexyl group, cyclohexyl group, 2-ethylhexyl group, a lauryl group and the like.

The carbon number of the aralkyl group is preferably 7 to 12. The aralkyl group may be an unsubstituted aralkyl group or an aralkyl group substituted by alkyl group, alkoxy group, aralkyl group, aryl group or halogen atom. Examples thereof include benzyl group, 1-phenylethyl group, 2-phenylethyl group, 3-phenylpropyl group, p-methylbenzyl group, m-methylbenzyl group, m-ethylbenzyl group, p-ethylbenzyl group, p-iso-propylbenzyl group, p-t-butylbenzyl group, p-methoxybenzyl group, m-methoxybenzyl group, o-methoxybenzyl group, m, p-dimethoxybenzyl group, p-ethoxy-m-methoxybenzyl group, p-phenylmethylbenzyl group, p-cumylbenzyl group, p-phenylbenzyl group, o-phenylbenzyl group, m-phenylbenzyl group, p-tolylbenzyl group, m-tolylbenzyl group, o-tolylbenzyl group and a p-chlorobenzyl group, and the like.

The carbon number of the aryl group is preferably 6 to 12. The aryl group may be an unsubstituted aryl group or an aryl group substituted by alkyl group, alkoxy group, aralkyl group, aryl group or halogen atom. Examples thereof include phenyl group, p-tolyl group, m-tolyl group, o-tolyl group, 2,5-dimethylphenyl group, 2,4-dimethylphenyl group, 3,5-dimethylphenyl group, 2, 3-dimethylphenyl group, 3,4-dimethylphenyl group, mesitylene group, p-ethylphenyl group, p-iso-propylphenyl group, p-t-butylphenyl group, p-methoxyphenyl group, 3,4-dimethoxyphenyl group, p-ethoxyphenyl group, p-chlorophenyl group, 1-naphthyl group, 2-naphthyl group, t-butylated naphthyl group, and the like.
In the general formula (Formula 1,2 and 4), $R^3$ is preferably represented by the following formula:

[Formula 5]

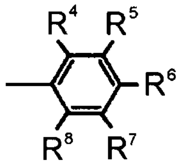

In the above formula, $R^4$ to $R^8$ may be identical or different from each other, represent a hydrogen atom, a halogen atom, a nitro group, an amino group, an alkyl group, an alkoxy group, an aryloxy group, an alkylcarbonyloxy group, an arylcarbonyloxy group, an alkylcarbonylamino group, an arylcarbonylamino group, an alkylsulfonylamino group, an arylsulfonylamino group, a monoalkylamino group, a dialkylamino group, or an arylamino group.
$R^2$ represents a hydrogen atom or an alkyl group, preferably a hydrogen atom. The alkyl group is preferably an alkyl group having 1 to 4 carbon atoms, which is, for example, methyl group, ethyl group, propyl group, isopropyl group, butyl group, isobutyl group, sec-butyl group, t-butyl group and the like.
The position of $R^2$ in the benzene ring in the general formula (Formula 2) may be the same or different, and is preferably 3-position, 4-position, or 5-position.
The first urea compound of the present invention is more preferably the first urea compound represented by the following general formula (Formula 6).

[Formula 6]

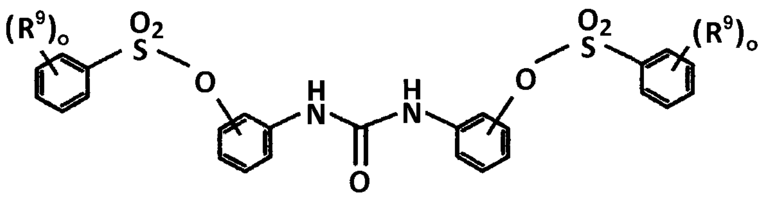

In the general formula (Formula 6), $R^9$ is alkyl group or alkoxy group, preferably alkyl group. n represents an integer of 0 to 3, preferably 0 to 2, and more preferably 0 to 1. The number of carbon atoms of the alkyl group is, for example, 1 to 12, preferably 1 to 8, and more preferably 1 to 4.
The position of $R^9$ in the benzene ring in the general formula (Formula 6) may be the same or different, and is preferably 3-position, 4-position or 5-position, more preferably 4-position.
Further, the examples of the first urea compound used in the present invention includes, N, N'-di- [3- (benzenesulfonyloxy) phenyl] urea, N, N'-di- [3-(benzenesulfonyloxy) -4-methyl-phenyl] urea, N, N'-di- [3- (benzenesulfonyloxy) -4-ethyl-phenyl] urea, N, N'-di- [3- (benzenesulfonyloxy) -5-methyl-phenyl] urea, N, N'-di- [3- (benzenesulfonyloxy) -4-propyl-phenyl] urea, N, N'-di- [3- (o-toluenesulfonyloxy) phenyl] urea, N, N'-di- [3- (m-toluenesulfonyloxy) phenyl] urea, N, N'-di- [3- (p-toluenesulfonyloxy) phenyl] urea, N, N'-di- [3- (p-toluenesulfonyloxy) -4-methyl-phenyl] urea, N, N'-di- [3- (p-xylenesulfonyloxy) phenyl] urea, N, N'-di- [3- (m-xylenesulfonyloxy) phenyl] urea, N, N'-di- [3-(mesitylene sulfonyloxy) phenyl] urea, N, N'-di- [3- (1-naphthalenesulfonyloxy) phenyl] urea, N, N'-di- [3- (2-naphthalenesulfonyloxy) phenyl] urea, N, N'-di- [3-(p-ethylbenzenesulfonyloxy) phenyl] urea, N, N'-di- [3- (p-propylbenzenesulfonyloxy) phenyl] urea, N, N'-di- [3- (p-isopropylbenzenesulfonyloxy) phenyl] urea, N, N'-di- [3- (pt-butylbenzenesulfonyloxy) phenyl] urea, N, N'-di- [3- (p-methoxybenzenesulfonyloxy) phenyl] urea, N, N'-di- [3- (m-methoxybenzenesulfonyloxy) phenyll urea, N, N'-di- [3- (o-methoxybenzenesulfonyloxy) phenyl] urea, N, N'-di- [3- (m, p-dimethoxybenzenesulfonyloxy) phenyl] urea, N, N'-di- [3- (p-ethoxybenzenesulfonyloxy) phenyl] urea, N, N'-di- [3- (p-propoxybenzenesulfonyloxy) phenyl] urea, N, N'-di- [3- (p-butoxybenzenesulfonyloxy) phenyl] urea, N, N'-di- [3- (p-cumylbenzylsulfonyloxy) phenyl] urea, N, N'-di- [3- (p-cumylbenzenesulfonyloxy) phenyl] urea, N, N'-di- [3-(o-phenylbenzenesulfonyloxy) phenyl] urea, N, N'-di- [3- (p-phenylbenzenesulfonyloxy) phenyl] urea, N, N'-di- [3- (p-chlorobenzenesulfonyloxy) phenyl] urea, N, N'-di- [4- (benzenesulfonyloxy) phenyl] urea, N, N'-di- [4- (p-toluenesulfonyloxy) phenyl] urea, N, N'-di- [3-(ethanesulfonyloxy) phenyl] urea, N, N'-di- [3-

(benzylsulfonyloxy) phenyl] urea, and the like. However, the first urea compound of the present invention is not limited to these.

The second urea compound used in the present invention is preferably N-[2-(3-phenylureido) phenyl] benzenesulfonamide. The compound is represented by the following formula and is available, for example, under the trade name of NKK 1304 manufactured by Nippon Soda Co., Ltd.

[Formula 7]

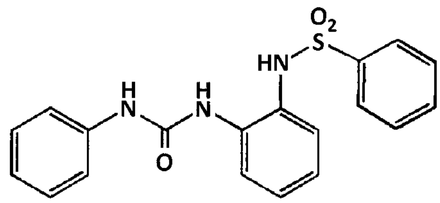

The previously wellknown sensitizers may be used as the sensitizer in the thermosensitive recording medium of the present invention. As such sensitizers, aliphatic acid amides such as stearic acid amide, palmitic acid amide and the like, ethylene bis-amide, montan acid wax, polyethylene wax, 1,2-di-(3-methylphenoxy) ethane, p-benzyl biphenyl, β-benzyloxy naphthalene, 4-biphenyl-p-tolyl ether, m-terphenyl, 1,2-diphenoxyethane, dibenzyl oxalate, di(p-chlorobenzyl) oxalate, di(p-methylbenzyl) oxalate, dibenzyl terephthalate, benzyl p-benzyloxy benzoate, di-p-tolyl carbonate, phenyl-α-naphthyl carbonate, 1,4-diethoxynaphthalene, 1-hydroxy-2-naphthoic acid phenyl ester, o-xylene-bis-(phenyl ether), 4-(m-methyl phenoxymethyl) biphenyl, 4,4'-ethylene dioxy-bis-benzoic acid dibenzyl ester, dibenzoyloxy methane, 1,2-di(3-methylphenoxy) ethylene, bis[2-(4-methoxy-phenoxy) ethyl] ether, methyl p-nitrobenzoate, phenyl p-toluene sulfonate, o-toluenesulfonamide, p-toluenesulfonamide, and the like may be listed as examples.

These sensitizers may be used individually and as mixtures of at least two of them.

A combined amount(in solid) of the leuco dye, the color developing agent and the sensitizer in the thermosensitive recording layer of the present invention is 70 weight % or more. When the combined amount(in solid) is 70.0 % by weight or more, the color developing sensitivity is improved. The combined amount(in solid) of the leuco dye, the color developing agent and the sensitizer in the thermosensitive recording layer is preferably 72 weight % or more, more preferably 79.0 weight % or more. The upper limit of the combined amount(in solid) is 90 weight % or less.

A coating amount of the thermosensitive recording layer of the present invention is 2.5 $g/m^2$ or less. The coating amount is preferably 2.4 $g/m^2$ or less, more preferably 2.1 $g/m^2$ or less. As described above, by setting the combined amount(in solid) of the leuco dye, the color developing agent and the sensitizer in the thermosensitive recording layer to 70.0 weight % or more, it is possible to maintain sensitivity that is acceptable for practical use even if the coating amount of the thermosensitive recording layer is reduced to 2.5 $g/m^2$ or less.

The lower limit of the coating amount of the thermosensitive recording layer is, for example, 1.2 $g/m^2$, and it is more preferable that the coating amount of the thermosensitive recording layer is 1.4 to 2.4 $g/m^2$.

It is preferable that the thermosensitive recording layer of the present invention does not contain a pigment such as an inorganic pigment. If the thermosensitive recording layer contains the pigment such as the inorganic pigment, the combined amount(in solid) of the leuco dye, the color developing agent and the sensitizer will be reduced accordingly, and color developing sensitivity may be reduced.

Examples of the inorganic pigments include kaolin, calcined kaolin, calcium carbonate, aluminum oxide, titanium oxide, magnesium carbonate, aluminum silicate, magnesium silicate, calcium silicate, aluminum hydroxide, and silica.

Examples of organic pigments include a plastic pigment.

It is preferable that the thermosensitive recording layer of the present invention does not contain a lubricant. If the thermosensitive recording layer contains a lubricant, the combined amount(in solid) of the leuco dye, the color developing agent and the sensitizer will be reduced accordingly, and color developing sensitivity may decrease.

Examples of the lubricants include fatty acid metal salts such as zinc stearate and calcium stearate, waxes, and silicone resins.

As the binder that can be used in the thermosensitive recording layer, polyvinyl alcohols such as completely saponified polyvinyl alcohol, partially saponified polyvinyl alcohol, modified polyvinyl alcohols such as acetoacetylated polyvinyl alcohol, carboxyl-modified polyvinyl alcohol, amide-modified polyvinyl alcohol, sulfonic acid-modified polyvinyl alcohol, butyral-modified polyvinyl alcohol, olefin-modified polyvinyl alcohol, nitrile-modified polyvinyl alcohol, pyrolidone-modified polyvinyl alcohol, silicone-modified polyvinyl alcohol, other modified polyvinyl alcohol, silane-modified acrylic resin, high Tg acrylic resin(preferably a non-core shell type acrylic resin, and its glass transition point (Tg) is higher than 50 degree C and lower than or equal to 95 degree C. The Tg is measured by differential scanning calorimetry (DSC).), other acrylic resin contains (meth)acrylic acid and a monomer that can be copolymerized with (meth)acrylic acid, hydroxyethyl

cellulose, methyl cellulose, ethyl cellulose, carboxymethyl cellulose, cellulose derivatives such as ethyl cellulose and acetyl cellulose, starches such as oxidized starch, etherified starch, styrene-maleic anhydride copolymer, styrene-butadiene copolymer, casein, gum Arabic, polyvinyl chloride, polyvinyl acetate, polyacrylamide, polyacrylic acid ester, polyvinyl butylal, polystyrol and their copolymers, silicone resins, petroleum resins, terpene resins, ketone resins, cumaron resins and the like may be listed as examples. The polymeric substances may be used upon dissolving them in a solvent such as water, alcohol, ketones, esters, hydrocarbons and the like or upon emulsifying or dispersing into a paste in water or other media. These polymeric materials may also be used in combinations according to the qualities demanded.

Stabilizing agents that improve oil resistance of recorded images and the like, such as 4,4'-butylidene (6-t-butyl-3-methylphenol), 2,2'-di-t-butyl-5,5'-dimethyl-4,4'-sulfonyl diphenol, 1,1,3-tris (2-methyl-4-hydroxy-5-cyclohexylphenyl) butane, 1,1,3-tris (2-methyl-4-hydroxy-5-t-butylphenyl) butane and the like may also be added in the range that does not adversely affect the desired effects for the problems described above. In addition, a benzophenone type and triazole type UV absorbers, dispersion agent, de-foaming agent, antioxidant, fluorescent dye and the like may also be used.

The types and amounts of the leuco dye, color developing agent, sensitizer and other various ingredients used in the thermosensitive recording medium of the present invention may be determined according to the required performance and printability. Although the amounts of the color developing agent, the sensitizer, the pigment, the stabilizing agent and the other ingredients are not particularly restricted, from 0.5 parts to 10 parts of the color developing agent, from 0.1 parts to 10 parts of the sensitizer, from 0.01 parts to 10 parts of the stabilizing agent and from 0.01 parts to 10 parts of the other ingredients are ordinarily used per 1 part of the leuco dye. The content (in solid) of the binders in the thermosensitive recording layer is suitably around from 5 to 25 weight %.

In the present invention, it is desirable to reduce the binder content so that the combined amount(in solid) of the leuco dye, the color developing agent and the sensitizer becomes 70.0% by weight or more. However, if the binder content is less than 5 weight %, the coating properties, particularly the curtain film suitability, will be reduced, so the lower limit is preferably 5 weight % or more.

The leuco dye, the color developing agent and the other materials added as needed are finely ground into particles with several microns or smaller in size, by using a grinder or a suitable emulsification device such as a ball mill, attritor, sand grinder and the like. The coating solutions are prepared by adding a binder and various additives to these depending on the objective. Water, alcohol and the like can be used as the solvent for the coating solution and the content (in solid) of the coating solution is about from 20 to 40 weight %.

<Protective Layer>

The thermosensitive recording medium of the present invention comprises a protective layer on the surface of the thermosensitive recording layer. In the thermosensitive recording layer of the present invention, the combined amount(in solid) of the leuco dye, the color developing agent and the sensitizer in the thermosensitive recording layer is 70 weight % or more. This increases the absolute amount of color former melted during printing, increasing the area of direct contact between a head and the color former and reducing the amount of material available to absorb the melted color former, which tends to deteriorate printing run-ability and sticking resistance. Therefore, in the present invention, a protective layer is essential to obtain a thermosensitive recording medium with excellent printing run-ability(particularly prevention of head debris adhesion) and sticking resistance.

This protective layer primarily consists of a binder and a pigment, and may further contain a lubricant.

The binder may be any of the binders compatible with the thermosensitive recording layer described above.

As a pigment, kaolin, calcined kaolin, calcium carbonate, aluminum oxide, titanium oxide, magnesium carbonate, aluminum silicate, magnesium silicate, calcium silicate, aluminum hydroxide, silica and the like may be used.

In particular, when the protective layer contains an inorganic pigment having an aspect ratio of 30 or more, the surface smoothness of the protective layer is improved, which in turn improves printing run-ability(particularly prevention of head debris adhesion). An example of an inorganic pigment with an aspect ratio of 30 or more is kaolin.

The aspect ratio is expressed as the maximum diameter of the pigment divided by its thickness (minimum length).

As the lubricant, fatty acid metal salts such as zinc stearate, calcium stearate, and the like, waxes, silicone resins, and the like may be cited.

When the protective layer contains an lubricant, the surface smoothness of the protective layer is improved, which in turn improves printing run-ability(particularly prevention of head debris adhesion).

As described above, in the present invention, in order to increase the combined amount(in solid) of the leuco dye, the color developing agent and the sensitizer in the thermosensitive recording layer is 70 weight % or more, it is preferable not to contain a lubricant in the thermosensitive recording layer, but to contain a lubricant in the protective layer in order to ensure smoothness as a thermosensitive recording medium.

The amount of the binder or the combined amount of the binder and the pigment in the protective layer is, in terms

of solid content, usually from 80 to 100 weight %, preferably from 90 to 100 weight %. The amount of the binder is preferably about from 30 to 300 parts by weight per 100 parts by weight of the pigment.

A coating solution of the protective layer may also contain, as necessary, stabilizing agent, UV absorbing agent, dispersant, defoaming agent, antioxidant, fluorescent dye and the like that can be used in the thermosensitive recording layer.

A coating amount of the protective layer can be preferably 2.5 g/$m^2$ or less, more preferably 2.3 g/$m^2$ or less, most preferably 2.0 g/$m^2$ or less.

The lower limit of the coating amount of the protective layer is, for example, 0.4 g/$m^2$, and it is more preferable that the coating amount of the protective layer is 0.7 to 2.5 g/$m^2$.

<Substrate>

Examples of the substrates include paper, synthetic paper, film, plastic and the like.

In the present invention, the method for coating the thermosensitive recording layer and other coating layers, such as protective layer and undercoat layer, is not limited in particular, but any known conventional techniques may be used. The method for coating may be appropriately selected from off-machine coating machines and on-machine coating machines, which are equipped with coaters such as air knife coater, rod blade coater, bent blade coater, bevel blade coater, roll coater, curtain coater and the like.

Furthermore, various technologies known in the thermosensitive recording medium field, such as a flattening treatment such as super calendaring and the like can be applied as needed after coating individual coating layers.

In particular, when the above-mentioned thermosensitive recording layer and protective layer are formed by applying a thermosensitive recording layer coating solution and a protective layer by a multilayer curtain coating method, and drying the resulting coatings, the coverage of the thermosensitive recording layer and the protective layer becomes good even with a low coating amount of 2.5 g/$m^2$ or less. Thus the surface smoothness of the thermosensitive recording layer and the protective layer is increased and the thermal printing runnability (particularly prevention of head debris adhesion) is further improved. As the coating method, a simultaneous multilayer curtain coating method is preferred.

Here, if the thermosensitive recording layer coating solution does not contain a pigment, the color developing sensitivity becomes improved. As mentioned above, if the thermosensitive recording layer coating solution contains a pigment, the combined amount of the leuco dye, the color developing agent and the sensitizer, which contribute to color developing sensitivity, is reduced accordingly.

However, if the content of leuco dye, etc. in the thermosensitive recording layer is high, the thermal printing runnability (particularly prevention of head debris adhesion and stick resistance) becomes an issue, so a protective layer was provided.

In particular, in the present invention, when the coating amount of the thermosensitive layer and/or protective layer is reduced to 2.5 g/$m^2$ or less, it is difficult to form a single layer curtain film, and multilayer curtain coating is preferred. Furthermore, in the present invention, when the combined amount(in solid) of the leuco dye, the color developing agent and the sensitizer in the thermosensitive recording layer of 70 weight % or more is used, sensitivity varies significantly depending on the coating amount, so multi layer curtain coating is preferred to control the coating amount and maintain consistent quality.

Then, using the multi layer curtain coating method improves the coating properties of the coating solution, resulting in better printing preciseness during high-speed printing and a lower printing defect rate during high-speed printing.

[Examples]

The following Examples illustrate the present invention, but the Examples are not intended to limit the scope of the present invention. In the following description, the terms parts and % indicate parts by weight and weight %, respectively.

[Example 1]

Undercoat layer coating solution was prepared by dispersing and stirring the following formulation:

Undercoat layer coating solution 1

| | |
|---|---|
| Calcined kaolin (Engelhard Corp.: Ansilex 90, <oil absorbance 90cc/100g>) | 100 parts |
| Styrene-butadiene copolymer latex (solid content: 48%) | 35.4 parts |
| polyvinyl alcohol 10% aqueous solution | 45 parts |
| Water | 157.1 parts |

Next, the undercoat layer coating solution was applied on one side of a substrate (base paper of 54 g/m$^2$) by using a blade coater, and was dried to prepare an undercoated paper with a dry coating amount of 4.0 g/m$^2$.

Each of color developing agent dispersion(liquids A1-A5), leuco dye dispersion(liquid B), and sensitizer dispersion (liquid C1-C3) having the following blend was wet ground separately by a sand grinder to an average particle size of 0.5 μm.

liquid A1 (Color developing agent dispersion)

| | |
|---|---|
| 4,4'-dihydroxy diphenyl sulfone | 5.7 parts |
| polyvinyl alcohol 10% aqueous solution | 5.1 parts |
| Water | 9.9 parts |

liquid A2 (Color developing agent dispersion)

| | |
|---|---|
| 4-hydroxy-4'-benzyloxydiphenylsulfone (Nicca Chemical Co., Ltd., trade name: BPS-MA3) | 6.0 parts |
| polyvinyl alcohol 10% aqueous solution | 11.3 parts |
| Water | 6.5 parts |

liquid A3 (Color developing agent dispersion)

| | |
|---|---|
| 4,4'-bis[3-(phenoxycarbonylamino) methylphenylureido] diphenylsulfone (UU manufactured by Fine Ace) | 3.5 parts |
| polyvinyl alcohol 10% aqueous solution | 7.4 parts |
| Water | 3.3 parts |

liquid A4 (Color developing agent dispersion)

| | |
|---|---|
| N-[2-(3-phenylureido)phenyl]benzenesulfonamide(trade name: NKK1304) | 6.0 parts |
| polyvinyl alcohol 10% aqueous solution | 7.5 parts |
| Water | 9.0 parts |

liquid A5(Color developing agent dispersion)

| | |
|---|---|
| N, N'-di- [3- (p-toluenesulfonyloxy) phenyl] urea(product name: S-176) | 3.5 parts |
| polyvinyl alcohol 10% aqueous solution | 4.4 parts |

(continued)

| | |
|---|---|
| Water | 3.3 parts |

liquid B (Leuco dye dispersion )

| | |
|---|---|
| 3-di buthylamino-6-methyl-7-anilinofluoran(ODB-2) | 2.85 parts |
| polyvinyl alcohol 10% aqueous solution | 4.8 parts |
| Water | 3.5 parts |

liquid C1 (Sensitizer dispersion)

| | |
|---|---|
| Diphenylsulfone (manufactured by Sanko co.,ltd., product name:DPS) | 5.7 parts |
| polyvinyl alcohol 10% aqueous solution | 7.1 parts |
| Water | 8.6 parts |

liquid C2 (Sensitizer dispersion)

| | |
|---|---|
| Stearic acid amide (manufactured by Fine Ace Co., Ltd., product name: Finawax) | 5.7 parts |
| polyvinyl alcohol 10% aqueous solution | 14.3 parts |
| Water | 3.8 parts |

liquid C3 (Sensitizer dispersion)

| | |
|---|---|
| 1,2-bis(3-Methylphenoxy) ethane (Sanko Co. Ltd, product name: KS232) | 0.5 parts |
| polyvinyl alcohol 10% aqueous solution | 0.6 parts |
| Water | 0.8 parts |

Next, each dispersion was mixed in the following percentage to prepare a thermosensitive recording layer coating solution.

Thermosensitive recording layer coating solution 1

| | |
|---|---|
| liquid A1 (Color developing agent dispersion) | 20.7 parts |
| liquid B (Leuco dye dispersion ) | 11.1 parts |
| liquid C1 (Sensitizer dispersion) | 21.4 parts |
| liquid C2 (Sensitizer dispersion) | 23.8 parts |
| polyvinyl alcohol 10% aqueous solution | 32 parts |

Next, protective layer coating solution was prepared by mixing the following formulations:

Protective layer coating solution

| | |
|---|---|
| Flat kaolin (50% dispersion, Imeris Minerals Japan, product name: Contour 1500, aspect ratio: 30) | 7.0 parts |
| polyvinyl alcohol 10% aqueous solution | 30 parts |
| Poly(amide epichlorohydrin) resin (Seiko PMC Corporation, product name: WS4030, solid content 25%) | 4.0 parts |
| Modified polyamine resin (Taoka Chemical Co., Ltd. product name: Sumirez Resin SPI-102A, solid content 45%) | 2.2 parts |
| Zinc stearate (product name: HydrinZ-7-30, solid content: 30% , particle diameter 5.5 microns, Chukyo Yushi Co., Ltd.,) | 1.7 parts |

Next, using a slide curtain coater, a coating film was formed on the undercoat layer of the undercoated paper from the lower layer side using the thermosensitive recording layer coating solution and the protective layer coating solution, and the coating film was simultaneously multilayer curtain coated at a coating speed of 600 m/min, followed by drying. Then, a supercalendering was carried out to obtain a thermosensitive recording medium having a thermosensitive recording layer with a dry coating amount of 1.8 $g/m^2$ and a protective layer with a dry coating amount of 0.7 $g/m^2$.

<Color Developing Sensitivity>

A printing was conducted on the prepared thermosensitive recording medium by using a TH-PMD tester of Okura Engineering Co., Ltd. at applied energy of 0.35 mJ/dot or 0.42 mJ/dot. The density of the printed portion was measured by using Macbeth Densitometer (with Amber filter).

<Solvent Resistance>

A white part of the produced thermosensitive recording medium was coated with ethanol (50.0 %) by a cotton swab and was allowed to stand under the condition of 23°C × 50%RH for 24 hours to visually evaluate by the following criteria:

Good: No coloration at all
Fair: Slight coloration, but not a problem in practical use.
Poor: Strong coloration

< Thermal printing run-ability (Prevention of head debris)>

Printing of about 10 cm grid was performed on the surface of the prepared thermosensitive recording medium with a label printer from Sato Corporation (Printer name: L'esprit R-8). Debris (head debris) stuck to the thermal head after printing was evaluated visually with the following criteria:

Good: Almost no head debris stuck to a thermal head
Fair: Some head debris stuck to a thermal head, but no missing nor blurring of printed images, and no practical problems for use.
Poor: Much sticking of head debris to a thermal head and missing and blurring of printed images observed.

< Stick Resistance >

A solid pattern of 100 mm length was printed on the prepared thermosensitive recording medium by using a thermal handheld terminal printer (Canon Inc., HT180) , and the prints were visually evaluated.

| | |
|---|---|
| Good: | No streaky whiteout is observed in the printed area. |
| Fair: | Several streaky whiteouts are observed in the printed area. |
| Poor: | Frequent streaky whiteouts are observed in the printed area. |

<Printing Defect Rate>

Arabic numerals "2" and "3" were solid printed on the prepared thermosensitive recording medium using a label thermal printer of Zebra Technologies Corp. (product name: 140XiIIIPlus) at printing speed of 8 inches/s and 2 inches/s. The printing defect rate was calculated using the following formula:

Printing Defect Rate = 100 - (Colored Area at a printing speed of 8 inches/s / Colored Area at a printing speed of 2 inches/s) (%)

The colored area was measured by digitally capturing the printed image, defining the pixels corresponding to grayscale values 0-97 as the colored area, and integrating the total number of colored pixels to determine the colored area.
The smaller the printing defect rate, more precise the printing at high speed. A printing defect rate of 35% or less is considered satisfactory.

[Example 2]

A thermosensitive recording medium was prepared in the same manner as described in Example 1 with the exception of changing the dry coating amount of the thermosensitive recording layer to 2.1 g/m$^2$.

[Example 3]

A thermosensitive recording medium was prepared in the same manner as described in Example 1 with the exception of changing the combined amount(in solid) of the leuco dye, the color developing agent and the sensitizer in the thermosensitive recording layer to 70.0 weight %.

[Example 4]

A thermosensitive recording medium was prepared in the same manner as described in Example 1 with the exception of changing the combined amount(in solid) of the leuco dye, the color developing agent and the sensitizer in the thermosensitive recording layer to 85.0 weight %.

[Example 5]

A thermosensitive recording medium was prepared in the same manner as described in Example 1 with the exception of changing the dry coating amount of the protective layer to 1.0 g/m$^2$.

[Example 6]

A thermosensitive recording medium was prepared in the same manner as described in Example 1 with the exception that no lubricant was added to the protective layer.

[Example 7]

A thermosensitive recording medium was prepared in the same manner as described in Example 1 with the exception of changing the inorganic pigment in the protective layer to aluminum hydroxide.

[Example 8]

A thermosensitive recording medium was prepared in the same manner as described in Example 1 with the exception that the color developing agent dispersion in the thermal recording layer was changed to 23.8 parts of liquid A2 and 14.2 parts of liquid A3, the sensitizer dispersion was changed to 1.9 parts of liquid C3, and a blend percentage of the leuco dye was changed to 5.0 parts.

[Example 9]

A thermosensitive recording medium was prepared in the same manner as described in Example 8 with the exception that the color developing agent dispersion in the thermal recording layer was changed to 22.5 parts of liquid A2

and 13.2 parts of liquid A5.

[Comparative Example 1]

A thermosensitive recording medium was prepared in the same manner as described in Example 1 with the exception of changing the combined amount(in solid) of the leuco dye, the color developing agent and the sensitizer in the thermosensitive recording layer to 46.0 weight % by incorporating an inorganic pigment into the hermosensitive recording layer.

[Comparative Example 2]

A thermosensitive recording medium was prepared in the same manner as described in Example 1 with the exception that the protective layer was not provided.

The evaluation results are shown in following Table 1 and 2.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Thermosensitive recording layer | formula | aluminum hydroxide | 0 | 0 | 0 | 0 | 0 | 0 | 0 | 0 | 0 |
| | | silica | 0 | 0 | 0 | 0 | 0 | 0 | 0 | 0 | 0 |
| | | lubricant | 0 | 0 | 0 | 0 | 0 | 0 | 0 | 0 | 0 |
| | | PVA | 3.2 | ← | 5.4 | 0 | 3.2 | ← | ← | 0 | 0 |
| | | color developing agent | 5.7(BPS) | ← | ← | ← | ← | ← | ← | 6.0(BPSMA3) 3.5(UU) | 6.0(NKK1304) 3.5(S-176) |
| | | sensitizer | 5.7(DPS) 5.7(Finawax) | ← | ← | ← | ← | ← | ← | 0.5(KS-232) | 0.5(KS-232) |
| | | leuco dye | 2.85(ODB-2) | ← | ← | ← | ← | ← | ← | 5.0(ODB-2) | 5.0(ODB-2) |
| | amount(in solid) of leuco dye, color developing agent and sensitizer | | 76% | 76% | 70% | 87% | 76% | 76% | 76% | 85% | 89% |
| | coating amount | g/m² | 1.8 | 2.1 | 1.8 | 1.8 | 2.1 | 1.8 | 1.8 | 2.0 | 2.0 |
| Protective layer | formula | flat kaolin | 3.5 | 3.5 | 3.5 | 3.5 | 3.5 | 3.5 | 0 | 3.5 | 3.5 |
| | | aluminum hydroxide | 0 | 0 | 0 | 0 | 0 | 0 | 3.5 | 0 | 0 |
| | | lubricant | 0.5 | 0.5 | 0.5 | 0.5 | 0.5 | 0 | 0.5 | 0.5 | 0.5 |
| | coating amount | g/m² | 0.7 | 0.7 | 0.7 | 0.7 | 1.0 | 0.7 | 0.7 | 2.5 | 2.5 |
| Basis weight | | g/m² | 62.5 | 63.0 | 62.5 | 62.5 | 63.1 | 63.3 | 63.4 | 70.1 | 70.8 |
| Color developing sensitivity | | 0.35mJ/dot | 1.09 | 1.19 | 1.02 | 1.18 | 1.13 | 1.11 | 1.05 | 1.03 | 1.06 |
| | | 0.42mJ/dot | 1.13 | 1.22 | 1.06 | 1.24 | 1.18 | 1.15 | 1.07 | 1.39 | 1.38 |
| Solvent resistance | | | Fair | Fair | Fair | Fair | Fair | Fair | Fair | Good | Excellent |
| Thermal printing runnability | Head debris adhesion | | Good | Good | Good | Good | Good | Good | Good | Excellent | Excellent |
| | Sticking | | Good | Good | Good | Good | Good | Fair | Good | Good | Good |
| Printing preciseness during high-speed printing | Printing defect rate(%) | | 25% | 23% | 27% | 23% | 28% | 25% | 27% | 32% | 33% |

[Table 2]

| | | | Comp-Example 1 | Comp-Example 2 |
|---|---|---|---|---|
| Thermosensitive recording layer | formula | aluminum hydroxide | 8 | 0 |
| | | silica | 5 | 0 |
| | | lubricant | 2 | 0 |
| | | PVA | 3.2 | ← |
| | | color developing agent | 5.7(BPS) | ← |
| | | sensitizer | 5.7(DPS)<br>5.7(Finawax) | ← |
| | | leuco dye | 2.85(ODB-2) | ← |
| | amount(in solid) of leuco dye, color developing agent and sensitizer | | 46% | 76% |
| | coating amount | g/m² | 1.8 | 1.8 |
| Protective layer | formula | flat kaolin | 3.5 | 0 |
| | | aluminum hydroxide | 0 | 0 |
| | | lubricant | 0.5 | 0 |
| | coating amount | g/m² | 0.7 | 0 |
| Basis weight | | g/m² | 63.2 | 62.2 |
| Color developing sensitivity | | 0.35mJ/dot | 0.61 | 1.20 |
| | | 0.42mJ/dot | 0.75 | 1.26 |
| Solvent resistance | | | Fair | Poor |
| Thermal printing runnability | Head debris adhesion | | Good | Poor |
| | Sticking | | Good | Poor |
| Printing preciseness during high-speed printing | Printing defect rate(%) | | 40% | 35% |

As shown in Table 1, the thermosensitive recording medium of the examples had excellent color developing sensitivity and thermal printing runnability. Furthermore, they also had excellent printing preciseness (printing defect rate) during high-speed printing.

In addition, in the Examples where kaolin with the aspect ratio of 30 or more were used as the inorganic pigments in the protective layer, color developing sensitivity were further improved compared to Example 7, in which aluminum hydroxide was used as the inorganic pigment.

In the case of Example 9, in which the urea compounds represented by the above-mentioned general formula (1) (NKK1304 and S176) was contained as the color developing agent, solvent resistance was improved compared to the other Examples.

On the other hand, in Comparative Example 1, where the combined amount(in solid) of the leuco dye, the color developing agent and the sensitizer in the thermosensitive recording layer was less than 70.0 weight %, the color developing sensitivity was poor, coupled with the fact that the coating amount of the thermosensitive recording layer was 2.5 g/m$^2$ or less. Furthermore, printing preciseness (printing defect rate) during high-speed printing was poor, which is thought to be due to a decrease in sensitivity.

In Comparative Example 2, where no protective layer was provided, color developing sensitivity was good, but

thermal printing runnability was poor.

## Claims

1. A thermosensitive recording medium having an undercoat layer, a thermosensitive recording layer comprising a colorless or pale colored electron donating leuco dye, an electron accepting color developing agent and a sensitizer, and a protective layer on a substrate in this order,

   wherein a combined amount(in solid) of the leuco dye, the color developing agent and the sensitizer in the thermosensitive recording layer is 70 weight % or more,
   and a coating amount of the thermosensitive recording layer is 2.5 $g/m^2$ or less.

2. The thermosensitive recording medium according to claim 1 or 2, wherein a coating amount of the protective layer is 2.5 $g/m^2$ or less.

3. The thermosensitive recording medium according to claim 1 or 2, wherein the thermosensitive recording layer does not contain an inorganic pigment.

4. The thermosensitive recording medium according to claim 1 or 2, wherein the thermosensitive recording layer does not contain a lubricant.

5. The thermosensitive recording medium according to claim 1 or 2, wherein the color developing agent contains a urea compound represented by the following general formula (Formula 1),

   [Formula 1]

   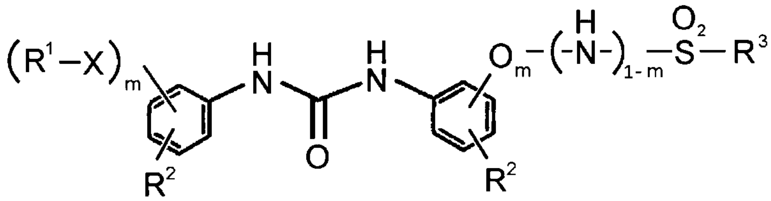

   (wherein X represents -O- or -NH-, $R^1$ represents a hydrogen atom or $-SO_2-R^3$, $R^3$ represents a substituted or unsubstituted alkyl group, an aralkyl group or an aryl group, $R^2$ represents a hydrogen atom or an alkyl group, m represents 0 or 1).

6. The thermosensitive recording medium according to claim 1 or 2, wherein the protective layer contains an inorganic pigment having an aspect ratio of 30 or more.

7. The thermosensitive recording medium according to claim 1 or 2, wherein the protective layer contains a lubricant.

8. The thermosensitive recording medium according to claim 1 or 2, wherein a printing defect rate represented by the following formula is 35 % or less.

   100 - (Colored area at a printing speed of 8 inches/s/Colored area at a printing speed of 2 inches/s) (%)

9. A method for manufacturing a thermosensitive recording medium according to claim 1 or 2,
   wherein the thermosensitive recording layer and the protective layer are formed by applying a thermosensitive recording layer coating solution and a protective layer by coating solution by a multilayer curtain coating method, and drying the resulting coatings.

10. A method for manufacturing a thermosensitive recording medium according to claim 9, wherein the thermosensitive recording layer coating solution does not contain a pigment.

**11.** A method for manufacturing a thermosensitive recording medium according to claim 9 or 10, wherein the multilayer curtain coating method is a simultaneous multilayer curtain coating method.

**Amended claims under Art. 19.1 PCT**

**1.** A thermosensitive recording medium having an undercoat layer, a thermosensitive recording layer comprising a colorless or pale colored electron donating leuco dye, an electron accepting color developing agent and a sensitizer, and a protective layer on a substrate in this order,

wherein a combined amount(in solid) of the leuco dye, the color developing agent and the sensitizer in the thermosensitive recording layer is 70 weight % or more,
and a coating amount of the thermosensitive recording layer is 2.5 $g/m^2$ or less.

**2.** The thermosensitive recording medium according to claim 1 or 2, wherein a coating amount of the protective layer is 2.5 $g/m^2$ or less.

**3.** The thermosensitive recording medium according to claim 1 or 2, wherein the thermosensitive recording layer does not contain an inorganic pigment.

**4.** The thermosensitive recording medium according to claim 1 or 2, wherein the thermosensitive recording layer does not contain a lubricant.

**5.** The thermosensitive recording medium according to claim 1 or 2, wherein the color developing agent contains a urea compound represented by the following general formula (Formula 1),

[Formula 1]

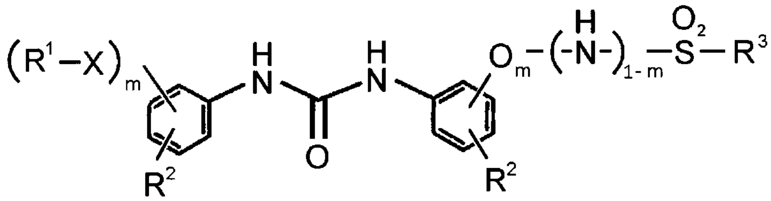

(wherein X represents -O- or -NH-, $R^1$ represents a hydrogen atom or $-SO_2-R^3$, $R^3$ represents a substituted or unsubstituted alkyl group, an aralkyl group or an aryl group, $R^2$ represents a hydrogen atom or an alkyl group, m represents 0 or 1).

**6.** The thermosensitive recording medium according to claim 1 or 2, wherein the protective layer contains an inorganic pigment having an aspect ratio of 30 or more.

**7.** The thermosensitive recording medium according to claim 1 or 2, wherein the protective layer contains a lubricant.

**8.** The thermosensitive recording medium according to claim 1 or 2, wherein a printing defect rate represented by the following formula is 35 % or less.

100 - (Colored area at a printing speed of 8 inches/s / Colored area at a printing speed of 2 inches/s) (%)

**9.** A method for manufacturing a thermosensitive recording medium according to claim 1 or 2,
wherein the thermosensitive recording layer and the protective layer are formed by applying a thermosensitive recording layer coating solution and a protective layer by coating solution by a multilayer curtain coating method, and drying the resulting coatings.

**10.** A method for manufacturing a thermosensitive recording medium according to claim 9, wherein the thermosensitive recording layer coating solution does not contain a pigment.

**11.** A method for manufacturing a thermosensitive recording medium according to claim 9 or 10, wherein the multilayer curtain coating method is a simultaneous multilayer curtain coating method.

# INTERNATIONAL SEARCH REPORT

International application No.
**PCT/JP2024/024945**

## A. CLASSIFICATION OF SUBJECT MATTER

***B41M 5/40***(2006.01)i; ***B05D 1/30***(2006.01)i; ***B05D 1/34***(2006.01)i; ***B05D 5/00***(2006.01)i; ***B05D 7/24***(2006.01)i; ***B41M 5/42***(2006.01)i; ***B41M 5/323***(2006.01)i; ***B41M 5/327***(2006.01)i; ***B41M 5/333***(2006.01)i; ***B41M 5/337***(2006.01)i
FI: B41M5/40 210; B05D1/30; B05D1/34; B05D5/00 Z; B05D7/24 303A; B05D7/24 303E; B41M5/323 220; B41M5/327 215; B41M5/333 220; B41M5/337 212; B41M5/42 210; B41M5/42 221

According to International Patent Classification (IPC) or to both national classification and IPC

## B. FIELDS SEARCHED

Minimum documentation searched (classification system followed by classification symbols)

B41M5/40; B05D1/30; B05D1/34; B05D5/00; B05D7/24; B41M5/42; B41M5/323; B41M5/327; B41M5/333; B41M5/337

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2021-137996 A (NIPPON PAPER INDUSTRIES CO., LTD.) 16 September 2021 (2021-09-16)<br>claims, paragraphs [0066]-[0101] | 1-10 |
| A | JP 2008-006744 A (NIPPON PAPER INDUSTRIES CO., LTD.) 17 January 2008 (2008-01-17)<br>entire text, all drawings | 1-10 |
| A | WO 2020/175649 A1 (OJI HOLDINGS CORPORATION) 03 September 2020 (2020-09-03)<br>entire text, all drawings | 1-10 |
| A | JP 2006-027114 A (NICCA CHEMICAL CO., LTD.) 02 February 2006 (2006-02-02)<br>entire text, all drawings | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/024945**

| Patent document cited in search report | Publication date (day/month/year) | Patent family member(s) | Publication date (day/month/year) |
|---|---|---|---|
| JP 2021-137996 A | 16 September 2021 | US 2023/0027721 A1<br>claims, paragraphs [0125]-[0245]<br>EP 4056605 A1<br>CN 114786957 A | |
| JP 2008-006744 A | 17 January 2008 | (Family: none) | |
| WO 2020/175649 A1 | 03 September 2020 | (Family: none) | |
| JP 2006-027114 A | 02 February 2006 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012056184 A
- JP 5626218 B
- JP 2003154760 A
- JP H0859603 B
- WO 02081229 A
- JP 2002301873 A
- JP H10258577 B